# EUROPEAN PATENT APPLICATION

(11) **EP 4 848 707 A1**
(43) Date of publication of application: **02.12.2026**
(21) Application number: 26176440.1
(22) Date of filing: 05.05.2026
(51) Int. Cl.: H04N 7/18, G06V 20/52, G08B 13/196

(54) **SYSTEM AND METHOD FOR APPLYING VIDEO ANALYTICS ALGORITHMS TO A PLURALITY OF VIDEO STREAMS IN A VIDEO SURVEILLANCE SYSTEM**

(30) Priority: 28.05.2025 US 202519221115
(71) Applicant: Honeywell International Inc., Charlotte, NC 28202 (US)
(72) Inventor: CHAURASIA, Jitendra S., Charlotte, 28202 (US); KUMAR, Bhavya, Charlotte, 28202 (US); SINGLA, Lukesh Kumar, Charlotte, 28202 (US); S K, Pramod Krishna, Charlotte, 28202 (US)
(74) Representative: Haseltine Lake Kempner LLP

(57) **Abstract**

Methods and systems for applying video analytics to multiple video streams from surveillance cameras. A motion detection algorithm detects and classifies objects in video streams into predefined object types. Video streams are prioritized from highest to lowest priority. The system determines which streams contain objects matching predefined video analytics (VA) object types and selects the highest priority stream containing such objects. The video analytics algorithm is then applied only to the selected video stream while other streams are not processed. The system can automatically switch between video streams based on detected VA objects. Camera groups can be created through a user interface, which also allows setting stream priorities and defining Regions of Interest. The video analytics algorithms include, for example, license plate recognition, crowd detection, facial recognition, people tracking and counting.

## Description

### TECHNICAL FIELD

The present disclosure relates to video surveillance systems, and more particularly to systems and methods for prioritizing the use of video analytics algorithms within a video surveillance system.

### BACKGROUND

Video surveillance systems typically employ a large number of video cameras each producing one or more video streams. There are a large number of different video analytics algorithms currently available. Many of these video analytics algorithms are available at a cost, meaning that a video surveillance system may generate substantial costs in the form of license fees for use of the various video analytics algorithms, particularly if there is a desire to have multiple video analytics algorithms running on each of the different video streams produced by the video surveillance system. What would be desirable are systems and methods for more efficiently applying video analytics algorithms to the various video streams of a video surveillance system.

### SUMMARY

The present disclosure relates to video surveillance systems, and more particularly to systems and methods for prioritizing the use of video analytics algorithms within a video surveillance system. An example may be found in a method for applying a video analytics algorithm to a plurality of video streams of a video surveillance system. Each of the plurality of video streams is captured by a respective one of a plurality of video cameras of the video surveillance system. The video analytics algorithm is configured to operate on one or more predefined video analytics (VA) object types. The method includes storing a relative priority for each of the plurality video streams, where the relative priority prioritizes the plurality of video streams from a highest priority video stream to a lowest priority video stream. A motion detection algorithm, which is separate from the video analytics algorithm, is applied to each of the plurality of video streams. The motion detection algorithm is configured to detect motion of objects in the respective video stream and classify the detected objects into one or more predefined object types. At least one of the predefined object types corresponds to at least one of the one or more predefined video analytics (VA) object types. A determination is made as to which of the plurality of video streams currently have a detected object that is classified as one of the one or more predefined video analytics (VA) object types, resulting in one or more video analytics (VA) suitable video streams. The video stream of the one or more video analytics (VA) suitable video streams that has the highest priority is selected. The video analytics algorithm is applied to the selected video stream and is not applied to the other of the plurality of video streams.

Another example may be found in a video surveillance system. The video surveillance system includes a plurality of video cameras that each produce a corresponding video stream, a memory for storing a relative priority for each of the plurality of video streams, and a controller that is operatively coupled to the plurality of video cameras and to the memory. The relative priority prioritizes the plurality video streams from a highest priority video stream to a lowest priority video stream. The controller is configured to apply a motion detection algorithm to each of the plurality of video streams, wherein the motion detection algorithm is configured to detect motion of objects in the respective video stream, and classify the detected objects into one or more predefined object types, wherein at least one of the predefined object types correspond to at least one of one or more predefined video analytics (VA) object types that a video analytics algorithm is configured to operate on. The controller is configured to determine which of the plurality of video streams currently have a detected object that is classified as one of the one or more predefined video analytics (VA) object types, resulting in one or more video analytics (VA) suitable video streams. The controller is configured to select the video stream of the one or more video analytics (VA) suitable video streams that has the highest priority. The controller is configured to apply the video analytics algorithm to the selected video stream, while not applying the video analytics algorithm to the other of the plurality of video streams.

Another example may be found in a method for applying a video analytics algorithm to a plurality of video streams of a video surveillance system. Each of the plurality of video streams is captured by a respective one of a plurality of video cameras of the video surveillance system. The method includes automatically applying a video analytics algorithm to a first one of the plurality of video streams to look for a video analytics (VA) event in the first one of the plurality of video streams, while not applying the video analytics algorithm to the other of the plurality of video streams. The method includes automatically switching to apply the video analytics algorithm to a second one of the plurality of video streams to look for the video analytics (VA) event in the second one of the plurality of video streams, while not applying the video analytics algorithm to the other of the plurality of video streams. In this method, a video analytics algorithm is sequentially applied to two or more of the plurality of video streams to look for the video analytics (VA) event.

The preceding summary is provided to facilitate an understanding of some of the features of the present disclosure and is not intended to be a full description. A full appreciation of the disclosure can be gained by taking the entire specification, claims, drawings, and abstract as a whole.

### BRIEF DESCRIPTION OF THE DRAWINGS

The disclosure may be more completely understood in consideration of the following description of various illustrative embodiments of the disclosure in connection with the accompanying drawings, in which:
Figure 1 is a schematic block diagram showing an illustrative video surveillance system;
Figure 2 is a flow diagram showing an illustrative method for applying a video analytics algorithm to a plurality of video streams; and
Figure 3 is a flow diagram showing an illustrative method for applying a video analytics algorithm to a plurality of video streams.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

### DESCRIPTION

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

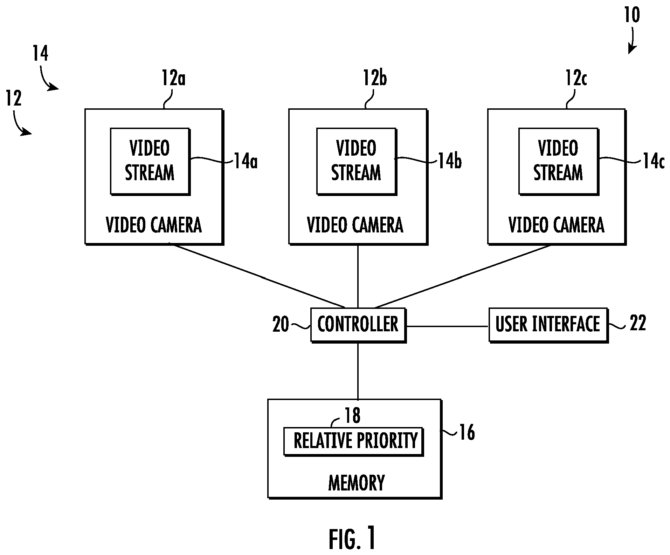

Figure 1 is a schematic block diagram showing an illustrative video surveillance system 10. The illustrative video surveillance system 10 includes a plurality of video cameras 12, individually labeled as 12a, 12b, and 12c. While a total of three video cameras 12 are shown, this is merely illustrative as the video surveillance system 10 may include considerably more than three video cameras 12. Each of the video cameras 12 produce a corresponding video stream 14, individually labeled as 14a, 14b, and 14c. The video surveillance system 10 includes a memory 16 that stores a relative priority 18 for each of the video streams 14. The relative priority 18 may prioritize the video streams 14 from a highest priority video stream 14 to a lowest priority video stream 14. A controller 20 is operatively coupled to the video cameras 12 and to the memory 16. A user interface 22 may be coupled to the controller 20.

The controller 20 is configured to apply a motion detection algorithm to each of the video streams 14, wherein the motion detection algorithm is configured to detect motion of objects in the respective video stream 14, and classify the detected objects into one or more predefined object types, wherein at least one of the predefined object types correspond to at least one of one or more predefined video analytics (VA) object types that a video analytics algorithm is configured to operate on. The motion detection algorithm may be separate from the video analytics algorithm. In some cases, the motion detection algorithm may be an open source motion detection (and object classification) algorithm, but this is not required.

In one example, the video analytics algorithm may include a people tracking algorithm, and the one or more predefined video analytics (VA) object types may include a human. In this case, the motion detection algorithm may be configured to detect motion of objects in the video stream and classify each of the moving objects into one or more predefined object types, including a human object type. In another example, the video analytics algorithm may include a people counting algorithm, and the one or more predefined video analytics (VA) object types may include a human. In another example, the video analytics algorithm may include license plate recognition algorithm, and the one or more predefined video analytics (VA) object types may include a license plate of a vehicle. The video analytics algorithms may include any suitable video analytics algorithm including one or more of intrusion detection, line crossing, object detection, facial recognition, license plate recognition, people counting, queue management, heat mapping, behavior analysis, video content analysis, crowd density detection, thermal and night vision analytics, scene change detection, people tracking, left and removed object detection, PPE detection, and obstruction detection, among others.

The controller 20 is configured to determine which of the video streams 14 currently have a detected object that is classified as one of the one or more predefined video analytics (VA) object types by the motion detection algorithm, resulting in one or more video analytics (VA) suitable video streams 14. The controller 20 is configured to select the video stream 14 of the one or more video analytics (VA) suitable video streams 14 that has the highest priority. The controller 20 is configured to apply the video analytics algorithm to the selected video stream 14, while not applying the video analytics algorithm to the other of the plurality of video streams 14.

In some cases, the controller 20 may be configured to group two or more of the video cameras 12 of the video surveillance system 10 into a camera group, and the video streams 14 captured by each of the video cameras 12 of the camera group may correspond to the plurality of video streams 14. In some cases, the controller 20 may be configured to receive a selection of each of the two or more of the video cameras 12 of the video surveillance system 10 to be grouped via the user interface 22, and then to group the selected two or more of the video cameras 12 to define the camera group. In some cases, the controller 20 may be configured to receive user input via the user interface 22 that sets the relative priority for each of the plurality of video streams 14. In some cases, the controller 20 may be configured to receive user input via the user interface 22 that defines one or more VA effective Regions of Interest (ROI) for each of one or more of the plurality video streams, and to apply the motion detection algorithm to only the one or more VA effective Regions of Interest (ROI) when detecting motion of objects in the respective video stream 14.

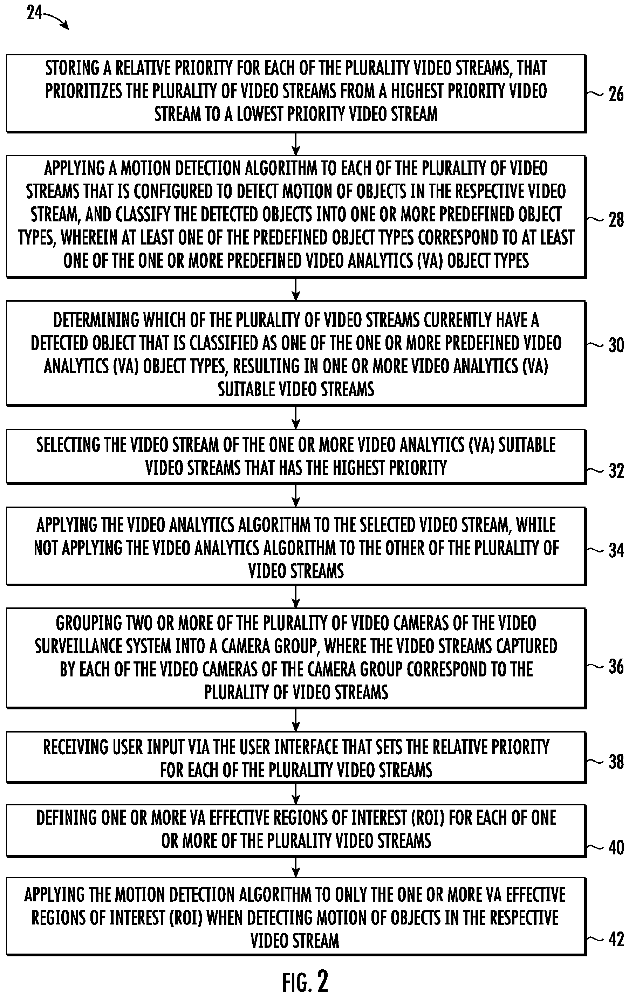

Figure 2 is a flow diagram showing an illustrative method 24 for applying a video analytics algorithm to a plurality of video streams (such as the video streams 14) of a video surveillance system (such as the video surveillance system 10). Each of the plurality of video streams is captured by a respective one of a plurality of video cameras (such as the video cameras 12) of the video surveillance system and the video analytics algorithm is configured to operate on one or more predefined video analytics (VA) object types. The method 24 includes storing a relative priority for each of the plurality video streams, wherein the relative priority prioritizes the plurality of video streams from a highest priority video stream to a lowest priority video stream, as indicated at block 26. A motion detection algorithm is applied to each of the plurality of video streams, wherein the motion detection algorithm is configured to detect motion of objects in the respective video stream, and classify the detected objects into one or more predefined object types, wherein at least one of the predefined object types correspond to at least one of the one or more predefined video analytics (VA) object types, as indicated at block 28. The motion detection algorithm is separate from the video analytics algorithm. In some cases, the motion detection algorithm may be an open source motion detection (and object classification) algorithm, but this is not required.

A determination is made as to which of the plurality of video streams currently have a detected object that is classified as one of the one or more predefined video analytics (VA) object types by the video analytics algorithm, resulting in one or more video analytics (VA) suitable video streams, as indicated at block 30. The video stream of the one or more video analytics (VA) suitable video streams that has the highest priority is selected, as indicated at block 32. The video analytics algorithm is applied to the selected video stream, while not applying the video analytics algorithm to the other of the plurality of video streams, as indicated at block 34.

In some cases, the method 24 may further include grouping two or more of the plurality of video cameras of the video surveillance system into a camera group, and the video streams captured by each of the video cameras of the camera group correspond to the plurality of video streams, as indicated at block 36. In some cases, grouping two or more of the video cameras of the video surveillance system into the camera group may include receiving user input from a user via a user interface. The user input may include a selection of each of the two or more of the video cameras of the video surveillance system to be grouped, and selecting a group command.

In some cases, the method 24 may include receiving user input via the user interface that sets the relative priority for each of the plurality video streams, as indicated at block 38. In some cases, the method 24 may include defining one or more VA effective Regions of Interest (ROI) for each of one or more of the plurality video streams, as indicated at block 40. The motion detection algorithm may be only applied to the one or more VA effective Regions of Interest (ROI) when detecting motion of objects in the respective video stream, as indicated at block 42.

In some cases, the video analytics algorithm may include a license plate recognition algorithm, and the one or more predefined video analytics (VA) object types may include a license plate of a vehicle. In some cases, the video analytics algorithm may include a crowd detection algorithm, and the one or more predefined video analytics (VA) object types may include a human. In some cases, the video analytics algorithm may include a facial recognition algorithm, and the one or more predefined video analytics (VA) object types may include a human face. These are just examples.

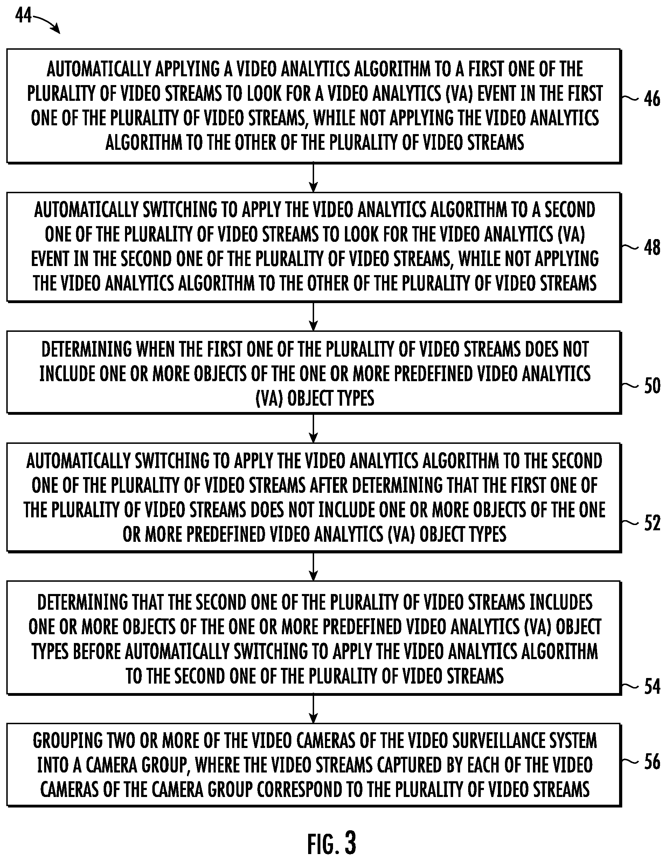

Figure 3 is a flow diagram showing an illustrative method 44 for applying a video analytics algorithm to a plurality of video streams of a video surveillance system. Each of the plurality of video streams is captured by a respective one of a plurality of video cameras of the video surveillance system. The illustrative method includes automatically applying a video analytics algorithm to a first one of the plurality of video streams to look for a video analytics (VA) event in the first one of the plurality of video streams, while not applying the video analytics algorithm to the other of the plurality of video streams, as indicated at block 46. The method 44 then includes automatically switching to apply the video analytics algorithm to a second one of the plurality of video streams to look for the video analytics (VA) event in the second one of the plurality of video streams, while not applying the video analytics algorithm to the other of the plurality of video streams, as indicated at block 48. In this method, a video analytics algorithm is sequentially applied to two or more of the plurality of video streams to look for the video analytics (VA) event. This may allow a single license of a video analytics algorithm to be applied to plurality of video streams.

In some cases, the video analytics algorithm may be configured to operate on one or more predefined video analytics (VA) object types to detect the video analytics (VA) event. The method 44 may include determining when the first one of the plurality of video streams does not include one or more objects of the one or more predefined video analytics (VA) object types, as indicated at block 50. This may be performed by a separate motion detection (and object classification) algorithm, or may be performed by the video analytics algorithm itself. The method 44 may include automatically switching to apply the video analytics algorithm to the second one of the plurality of video streams after determining that the first one of the plurality of video streams does not include one or more objects of the one or more predefined video analytics (VA) object types, as indicated at block 52.

In some cases, the method 44 may include determining that the second one of the plurality of video streams includes one or more objects of the one or more predefined video analytics (VA) object types before automatically switching to apply the video analytics algorithm to the second one of the plurality of video streams, as indicated at block 54. This may be performed by a separate motion detection (and object classification) algorithm, for example.

In some cases, two or more of the video cameras of the video surveillance system are grouped into a camera group, where the video streams captured by each of the video cameras of the camera group correspond to the plurality of video streams, as indicated at block 56. In some cases, grouping two or more of the video cameras of the video surveillance system into the camera group may include receiving user input from a user via a user interface and selecting a group command. The user input may include a selection of each of the two or more of the video cameras of the video surveillance system to be grouped.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. A method for applying a video analytics algorithm to a plurality of video streams of a video surveillance system, wherein each of the plurality of video streams is captured by a respective one of a plurality of video cameras of the video surveillance system, wherein the video analytics algorithm is configured to operate on one or more predefined video analytics (VA) object types, the method comprising:
storing a relative priority for each of the plurality video streams, wherein the relative priority prioritizes the plurality of video streams from a highest priority video stream to a lowest priority video stream;
applying a motion detection algorithm to each of the plurality of video streams, wherein the motion detection algorithm is configured to detect motion of objects in the respective video stream, and classify the detected objects into one or more predefined object types, wherein at least one of the predefined object types correspond to at least one of the one or more predefined video analytics (VA) object types;
determining which of the plurality of video streams currently have a detected object that is classified as one of the one or more predefined video analytics (VA) object types, resulting in one or more video analytics (VA) suitable video streams;
selecting the video stream of the one or more video analytics (VA) suitable video streams that has the highest priority; and
applying the video analytics algorithm to the selected video stream, while not applying the video analytics algorithm to the other of the plurality of video streams.

2. The method of claim 1, comprising:
grouping two or more of the plurality of video cameras of the video surveillance system into a camera group; and
wherein the video streams captured by each of the video cameras of the camera group correspond to the plurality of video streams.

3. The method of claim 2, wherein grouping two or more of the video cameras of the video surveillance system into the camera group comprises receiving user input from a user via a user interface, wherein the user input includes a selection of each of the two or more of the video cameras of the video surveillance system to be grouped, and selecting a group command.

4. The method of claim 3, comprising receiving user input via the user interface that sets the relative priority for each of the plurality video streams.

5. The method of any of claims 1-4, comprising:
defining one or more VA effective Regions of Interest (ROI) for each of one or more of the plurality video streams; and
applying the motion detection algorithm to only the one or more VA effective Regions of Interest (ROI) when detecting motion of objects in the respective video stream.

6. The method of any of claims 1-5, wherein the video analytics algorithm comprises a license plate recognition algorithm, and the one or more predefined video analytics (VA) object types comprises a car.

7. The method of any of claims 1-6, wherein the video analytics algorithm comprises a crowd detection algorithm, and the one or more predefined video analytics (VA) object types comprises a human.

8. The method of any of claims 1-7, wherein the video analytics algorithm comprises a facial recognition algorithm, and the one or more predefined video analytics (VA) object types comprises a face.

9. A video surveillance system comprising:
a plurality of video cameras each producing a corresponding video stream;
a memory for storing a relative priority for each of the plurality video streams, wherein the relative priority prioritizes the plurality of video streams from a highest priority video stream to a lowest priority video stream;
a controller operatively coupled to plurality of video cameras and the memory, the controller configured to:
apply a motion detection algorithm to each of the plurality of video streams, wherein the motion detection algorithm is configured to detect motion of objects in the respective video stream, and classify the detected objects into one or more predefined object types, wherein at least one of the predefined object types correspond to at least one of one or more predefined video analytics (VA) object types that a video analytics algorithm is configured to operate on;
determine which of the plurality of video streams currently have a detected object that is classified as one of the one or more predefined video analytics (VA) object types, resulting in one or more video analytics (VA) suitable video streams;
select the video stream of the one or more video analytics (VA) suitable video streams that has the highest priority; and
apply the video analytics algorithm to the selected video stream, while not applying the video analytics algorithm to the other of the plurality of video streams.

10. The video surveillance system of claim 9, wherein the controller is configured to:
group two or more of the video cameras of the video surveillance system into a camera group; and
wherein the video streams captured by each of the video cameras of the camera group correspond to the plurality of video streams.

11. The video surveillance system of claim 10, comprising:
a user interface for receiving user input from a user;
the controller is operatively coupled to the user interface, the controller is configured to:
receive a selection of each of the two or more of the video cameras of the video surveillance system to be grouped via the user interface; and
group the selected two or more of the video cameras to define the camera group.

12. The video surveillance system of claim 9, comprising:
a user interface for receiving user input from a user; and
the controller is operatively coupled to the user interface, the controller is configured to:
receive user input via the user interface that sets the relative priority for each of the plurality video streams.

13. The video surveillance system of claim 9, comprising:
a user interface for receiving user input from a user;
the controller is operatively coupled to the user interface, the controller is configured to:
receive user input via the user interface that defines one or more VA effective Regions of Interest (ROI) for each of one or more of the plurality video streams; and
apply the motion detection algorithm to only the one or more VA effective Regions of Interest (ROI) when detecting motion of objects in the respective video stream.

14. The video surveillance system of any of claims 9-13, wherein at least one of:
the video analytics algorithm comprises a people tracking algorithm, and the one or more predefined video analytics (VA) object types comprises a human; or
the video analytics algorithm comprises a people counting algorithm, and the one or more predefined video analytics (VA) object types comprises a human.

15. A method for applying a video analytics algorithm to a plurality of video streams of a video surveillance system, wherein each of the plurality of video streams is captured by a respective one of a plurality of video cameras of the video surveillance system, the method comprising:
automatically applying a video analytics algorithm to a first one of the plurality of video streams to look for a video analytics (VA) event in the first one of the plurality of video streams, while not applying the video analytics algorithm to the other of the plurality of video streams; and
automatically switching to apply the video analytics algorithm to a second one of the plurality of video streams to look for the video analytics (VA) event in the second one of the plurality of video streams, while not applying the video analytics algorithm to the other of the plurality of video streams.
